# FASCICULE DE BREVET EUROPEEN

(11) **EP 2 520 997 B1**
(45) Date de publication et mention de la délivrance du brevet: **28.10.2020**
(21) Numéro de dépôt: 12305489.2
(22) Date de dépôt: 02.05.2012
(51) Int. Cl.: G05D 23/13

(54) **Dispositif de distribution d'un fluide thermostate avec des alimentations eau froide/eau chaude isolees**
Vorrichtung zur Verteilung einer temperaturgeregelten Flüssigkeit unter isolierter Einspeisung von kaltem und warmem Wasser
Thermostatically controlled fluid dispensing device with insulated cold/hot water inputs

(30) Priorité: 05.05.2011 FR 1153849
(43) Date de publication de la demande: 07.11.2012
(73) Titulaire: FIRST LABO, 16160 Gond-Pontouvre (FR)
(72) Inventeur: Goury, Patrick, 16600 RUELLE SUR TOUVRE (FR)
(74) Mandataire: Eidelsberg, Olivier Nathan

(56) Documents cités:
- EP-A1- 0 811 184
- EP-A1- 1 190 284
- EP-B1- 0 834 691
- EP-B1- 0 855 635
- FR-A1- 2 461 177
- FR-A1- 2 927 141
- FR-A1- 2 940 397
- Anonymous: "GROHE Grotherm 1000", , 31 July 2009 (2009-07-31), XP055351855, Retrieved from the Internet: URL:https://www.hornbach.ch/data/shop/D04/ 001/780/493/640/61/8823088_Doc_01_CH_20131 216121359.pdf [retrieved on 2017-03-06]
- Anonymous: "Maintenance guide for thermostatic valves | Guide d'entretien pour les valves thermostatiques", , 30 September 2010 (2010-09-30), XP055351866, Retrieved from the Internet: URL:https://dw.riobel.ca/riobel.ca/files/g uide_reparation/Valve_Them_Old.pdf [retrieved on 2017-03-06]
- Anonymous: "Maintenance Guide - Hansa", , 31 December 2010 (2010-12-31), XP055351871, Retrieved from the Internet: URL:http://www.hansa.com/downloads/brochur es.html&?eID=filedownload&file=downloadcen ter/_data/26/hansa_maintenance_guide.pdf [retrieved on 2017-03-06]

## Description

La présente invention concerne un dispositif de distribution d'un fluide thermostaté avec des alimentations isolées en eau froide / eau chaude.

On connaît plusieurs moyens de distribuer de l'eau froide et de l'eau chaude sanitaires dans une installation sanitaire.

Il existe le moyen le plus rudimentaire à savoir un robinet sur l'alimentation en eau chaude sanitaire, un robinet sur l'eau froide avec chacun une sortie de distribution.

Il n'y a aucun mélange à la distribution, chaque contrôle s'effectue de façon séparée, la température de sortie est celle de chaque réseau.

Il a été imaginé de prévoir un mélangeur qui comprend un robinet sur l'eau chaude sanitaire pour en contrôler le débit et un robinet sur l'eau froide pour en contrôler le débit mais avec une sortie de distribution commune de façon à délivrer une eau à température variable.

L'ajustement de la température de l'eau mélangée est délicat, très peu précis si bien qu'il y a un gaspillage d'eau pour arriver à la bonne température et à chaque ouverture/fermeture, il faut recommencer le réglage. De plus, la température n'est pas nécessairement bien homogène.

Un progrès a consisté à prévoir des mitigeurs à monocommande et avec une sortie unique de distribution dans lesquels l'arrivée d'eau chaude sanitaire et l'arrivée d'eau froide attaquent une même cartouche manœuvrée par une seule commande.

Cette monocommande assure, généralement par une rotation, la variation de la proportion d'eau chaude sanitaire et d'eau froide distribuée tandis qu'une manœuvre soulèvement/abaissement de cette même monocommande assure un réglage du débit de l'eau mitigée contrôlée en amont.

Ce progrès permet de conserver le même réglage de la température d'eau délivrée en réglant le débit à la demande. Après fermeture, dès l'ouverture la proportion du mélange eau chaude sanitaire/eau froide est la même.

On peut faire varier la température du mélange en cours de distribution, sans changer le débit.

L'inconvénient reste qu'il faut quand même tâtonner pour arriver à la bonne température. De plus, en cas de chute dans une douche par exemple, la commande peut être déplacée et la sortie de distribution ne délivrer que de l'eau chaude. Si le débit sur une alimentation varie par puisage excessif sur l'alimentation par d'autres points d'eau par exemple, la température du mélange varie car il n'y a pas compensation.

Aussi, il a été mis au point une robinetterie dite thermostatique, c'est-à-dire comprenant une commande de la température et une commande du débit.

La commande de la température comporte une cartouche thermostatique qui assure la délivrance d'une eau à une température donnée, au moins au degré près, quelles que soient les variations de débit des alimentations en eau chaude sanitaire ou en eau froide.

En aval de cette cartouche thermostatique, il est prévu la commande de débit qui n'a qu'un seul rôle, celui de régler le débit de sortie au point de distribution.

Cet agencement donne toute satisfaction pour l'utilisateur, toute garantie en terme de sécurité vis-à-vis de la température délivrée, si une alimentation en eau froide par exemple venait à s'interrompre, la distribution est instantanément coupée évitant tout risque de brûlure.

Du point de vue extérieur, pour un utilisateur l'agencement répond à tous les besoins.

Il n'en est pas de même pour la sécurité biologique, notamment dans le cas de milieux sensibles comme les lieux sanitaires collectifs comme les hôtels, les piscines, les équipements sportifs mais aussi et surtout en milieu de santé comme les cliniques et hôpitaux.

En effet, si l'on considère plus en détail les robinetteries thermostatiques, on constate qu'il est prévu une commande de débit en aval. Ceci conduit à une communication entre l'eau chaude et l'eau froide au droit de la cartouche thermostatique, en amont de la commande de débit.

Or, la température entre deux utilisations va baisser et se maintenir à une température parfaitement adaptée pour le développement d'une faune bactérienne pathogène, surtout en milieu médical.

Cette faune bactérienne peut se développer dans la cartouche, migrer vers les alimentations et contaminer le réseau très rapidement.

Aussi, une solution a été trouvée pour pallier cet inconvénient à savoir installer des clapets anti retour, de fermeture, en amont de la cartouche thermostatique tant sur l'alimentation en eau froide que sur l'alimentation en eau chaude sanitaire.

Ces clapets assurent ainsi l'obturation de l'alimentation et donc interdisent la migration de bactéries.

Cette solution n'est aucunement satisfaisante car il subsiste une contrainte qui est celle des dépôts minéraux tels que les dépôts de tartre par exemple.

Très rapidement, on constate que ces clapets nécessairement de petites dimensions ne sont plus étanches. Ceci n'a bien sûr aucune conséquence au niveau du fonctionnement de la robinetterie pour l'utilisateur si bien que ce problème n'est pas soulevé.

Dans les établissements très soucieux d'appliquer des règles strictes d'hygiène, les corps de robinets sont démontés régulièrement et les clapets sont remplacés mais on comprend aisément les coûts engendrés, les contraintes de temps et d'immobilisation, la gestion de ces tâches quand il y a des centaines de mitigeurs thermostatiques dans une installation, par exemple hospitalière.

Il est absolument nécessaire de disposer de robinetteries qui soient d'un coût limité de façon à rester dans les budgets, notamment hospitaliers, qui requiert le minimum d'entretien, qui soient fiables avec une longue durée de vie.

Cette intercommunication entre les circuits d'eau chaude sanitaire et d'eau froide doit être supprimée tout en conservant bien entendu les fonctionnalités requises par l'utilisateur et actuellement disponibles. En effet, il est nécessaire de recourir aux cartouches déjà existantes notamment pour ce qui est de la cartouche de thermorégulation car il est nécessaire de faire homologuer de tels dispositifs et il faut pouvoir utiliser celles qui sont disponibles sur le marché.

En effet, la sécurité est un point primordial, notamment en milieu hospitalier ou plus généralement collectif, milieux dans lesquels en cas de défaillance, il faut pouvoir tout bloquer et c'est le cas des cartouches existantes qui, en cas de rupture d'alimentation d'eau froide par exemple, interrompt l'alimentation en eau chaude.

Afin de bien établir l'existant, il est aussi nécessaire de rappeler que les robinetteries sont maintenant équipées pour les commandes de débit notamment de lumières et de disques d'obturation qui sont généralement en céramique ou en matériaux composites chargés. Ceci a l'avantage de conduire à des pièces ayant une très grande résistance à l'usure, une très grande précision avec des jeux quasiment nuls si bien que les rotations ou les translations lors des manœuvres des commandes provoquent une élimination du tartre éventuellement déposé. De plus toutes les pièces en élastomère étant supprimées, il n'y a pas d'usure ou du moins une usure extrêmement faible et un auto entretien des surfaces d'étanchéité.

Une cartouche de réglage de débit ne s'entartre pas et quand elle assure une coupure, celle-ci est efficace au cours du temps, c'est ce qui explique que les mitigeurs à disques de ce type ne gouttent pas.

Au brevet européen 0 855 635, il est décrit un dispositif comportant un corps ayant une cartouche thermostatique, une cartouche de débit dans une chambre de débit directement montée sur des alimentations en eau froide et en eau chaude, et une sortie d'eau mitigée, la cartouche de débit étant disposée en amont de la cartouche thermostatique, les deux cartouches pouvant être substituées indépendamment l'une de l'autre suivant un même axe dans une même direction et deux conduits, respectivement pour l'eau chaude et l'eau froide, entre la chambre de débit et la cartouche thermostatique sont reliés à la cartouche thermostatique d'un seul et même côté.

Au brevet européen 0 834 691, il est décrit une installation comprenant un corps de robinetterie ayant une cartouche thermostatique, une cartouche de débit et une sortie de distribution d'eau mitigée. La cartouche de débit est disposée en aval de la cartouche thermostatique. En outre, les deux cartouches ne peuvent être substituées que suivant un même axe dans une même direction et deux conduits, respectivement pour l'eau chaude et l'eau froide, sont reliés à la cartouche thermostatique d'un seul et même côté.

Au brevet français 80 14933, il est décrit un dispositif suivant le préambule de la revendication 1.

La présente invention propose un dispositif de distribution d'un fluide thermostaté par cartouche avec des alimentations en eau chaude et en eau froide séparées suivant la revendication 1.

Le dispositif permet ainsi d'éviter la contamination du circuit d'eau chaude sanitaire et du circuit d'eau froide par intercommunication.

Le dispositif selon la présente invention permet de conserver les avantages des dispositifs thermostatiques existants. Ainsi, il est possible d'adapter le dispositif selon la présente invention sur les installations existantes en lieu et place des combinés thermostatiques actuellement en place, sans aucune perturbation et sans modification pour l'utilisateur.

Les services en charge de l'entretien sont par contre soulagés de l'entretien des clapets qui sont supprimés. De même, il n'existe pas de pièces en élastomère, pas de pièces mobiles susceptibles de dégradation ou d'usure.

La sécurité sanitaire, mais surtout thermostatique, est parfaitement préservée. Le dispositif selon la présente invention est maintenant décrit en détail suivant un mode de réalisation schématique, non limitatif, en regard des dessins annexés sur lesquels les différentes vues représentent :
- Figure 1: une vue d'un agencement d'une robinetterie thermostatique de l'art antérieur en position fermée,
- Figure 2: une vue d'un agencement d'une robinetterie thermostatique de l'art antérieur en position ouverte,
- Figure 3 : une vue en perspective d'un agencement d'une robinetterie thermostatique selon la présente invention, dans une variante à sectionnement par translation,
- Figure 4 : une vue en coupe d'une robinetterie thermostatique selon la présente invention, en position fermée,
- Figure 5 : une vue en coupe d'une robinetterie thermostatique selon la présente invention, en position ouverte.

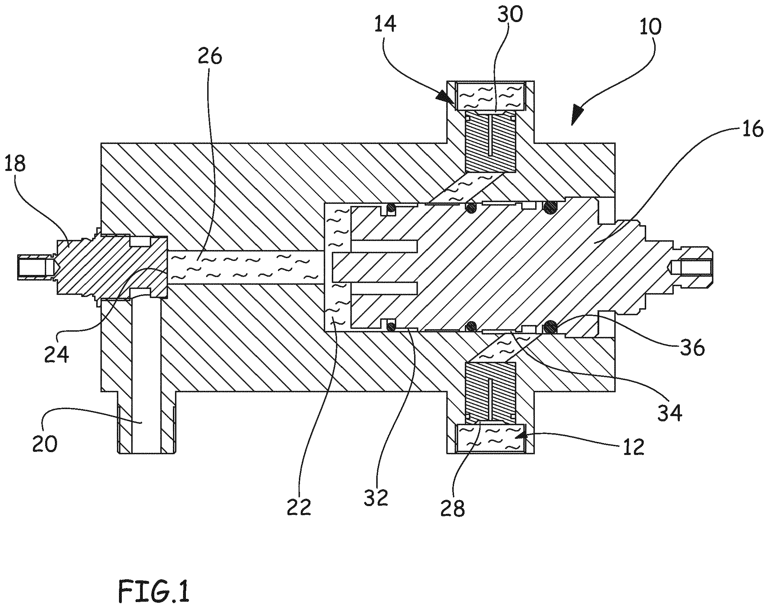

Sur la figure 1, on a représenté un corps 10 d'une robinetterie thermostatique de l'art antérieur.

Ce corps 10 comporte une alimentation 12 en eau froide et une alimentation 14 en eau chaude ainsi qu'une cartouche 16 thermostatique et une cartouche 18 de réglage de débit.

Le corps 10 comprend une sortie 20 de distribution d'eau mitigée thermostatée.

De plus, il est prévu dans ce corps 10 une chambre 22 thermostatique, une chambre 24 de débit et une liaison 26 entre les deux chambres.

Sur chacune des alimentations 12 et 14, il est prévu un clapet 28,30 anti retour destiné à fermer l'alimentation concernée lorsqu'il n'y a pas de puisage, ces clapets étant généralement soumis à l'action d'un ressort, ceci de façon connue.

La cartouche 16 thermostatique comprend un organe interne étalonné qui assure un dosage adapté entre l'eau froide et l'eau chaude sanitaire pour délivrer un mélange thermostaté avec une grande précision et ceci de façon constante.

Pour alimenter le cœur de la cartouche, il est prévu des gorges 32,34 annulaires, délimitées par des joints toriques 36.

En position fermée sur la figure 1, les clapets 28,30 assurent l'obturation des alimentations 12,14, sauf s'ils sont entartrés, ce qui est le problème de ces agencements de l'art antérieur.

La cartouche 18 de débit est en position fermée, si bien que la sortie 20 de distribution ne délivre aucun fluide.

On constate que si les clapets ne sont pas fermés, les fluides des alimentations 12 et 14 sont en contact au sein de la cartouche 16 thermostatique et au sein de la chambre 22 thermostatique voire au sein de la liaison 26.

C'est le problème posé par les mitigeur à cartouche thermostatique qui est l'art antérieur concerné. Toute autre commande qui ne serait pas automatique ou qui ne respecterait ctte sécurité liée à la cartouche thermostatique est à retirer de l'art antérieur.

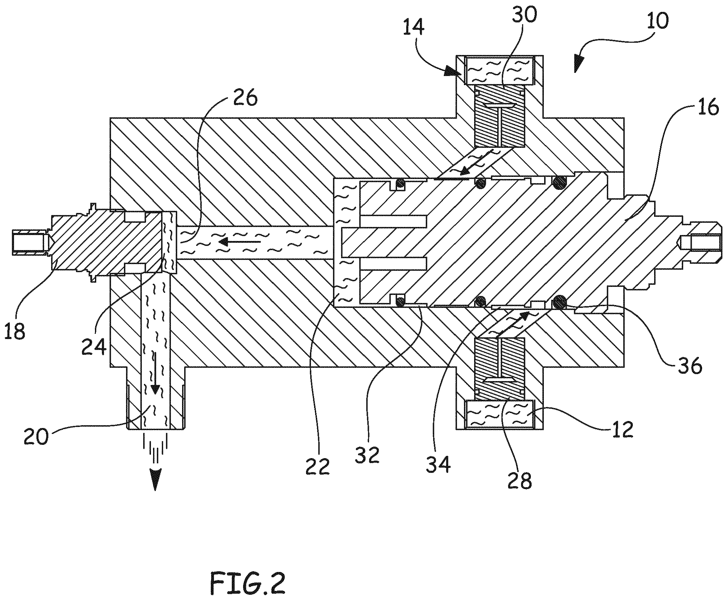

Sur la figure 2, la cartouche 16 thermostatique ayant été réglée, elle est prête à délivrer l'eau mitigée à la température requise.

L'utilisateur en manœuvrant la cartouche 18 de débit à l'ouverture assure la distribution de l'eau mitigée par la sortie 20 de distribution.

Il lui suffit de régler le débit.

L'eau mitigée sort de la chambre 22 thermostatique, passe par la liaison 26 et à travers la chambre 24 de débit puis à travers la sortie 20 de distribution.

Les clapets 28,30 sont alors ouverts sous la pression de l'eau d'alimentation, le circuit de distribution étant ouvert.

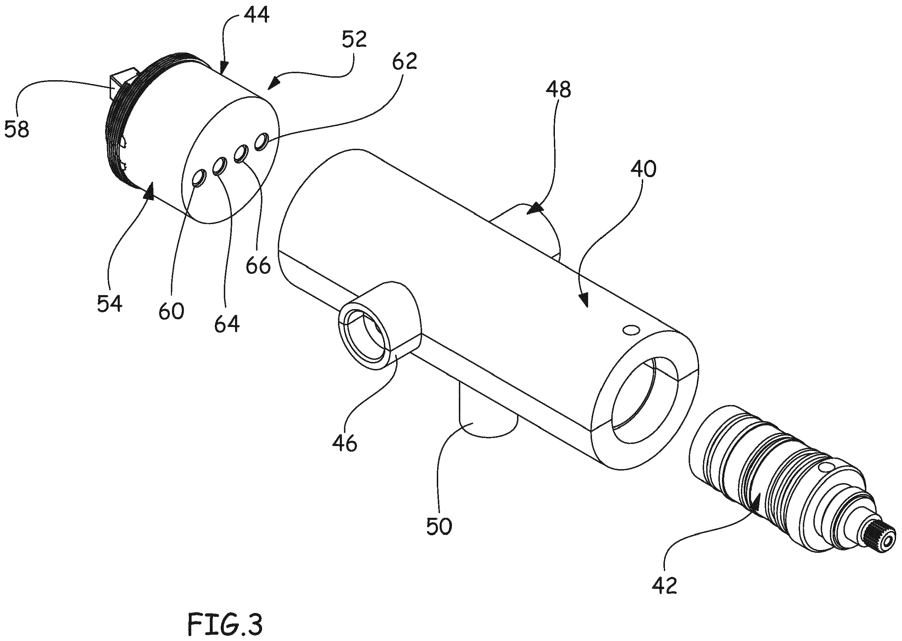

Sur la figure 3, on a représenté un corps 40 de robinetterie avec une cartouche 42 thermostatique, une cartouche 44 de débit, une alimentation 46 en eau froide et une alimentation 48 en eau chaude sanitaire ainsi qu'une sortie 50 de distribution d'eau mitigée.

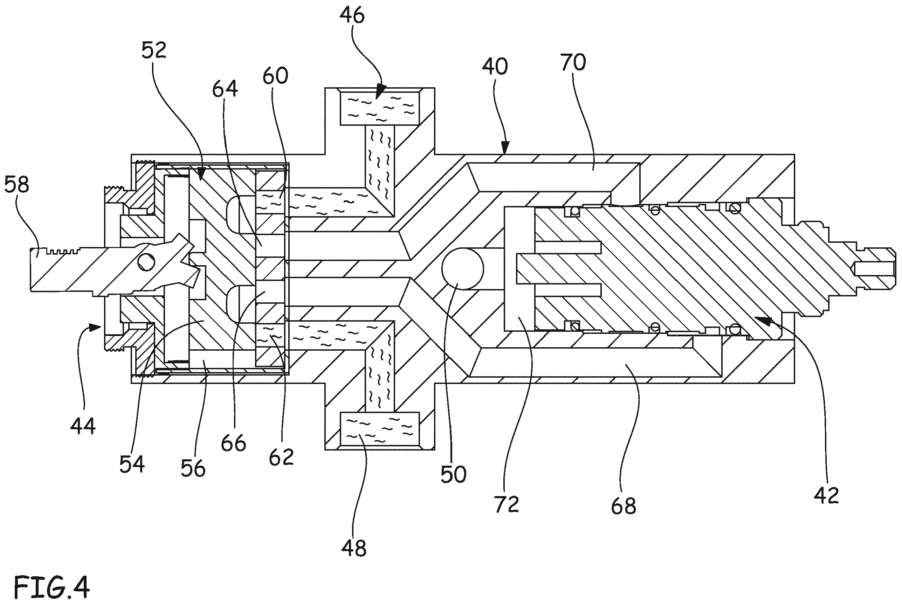

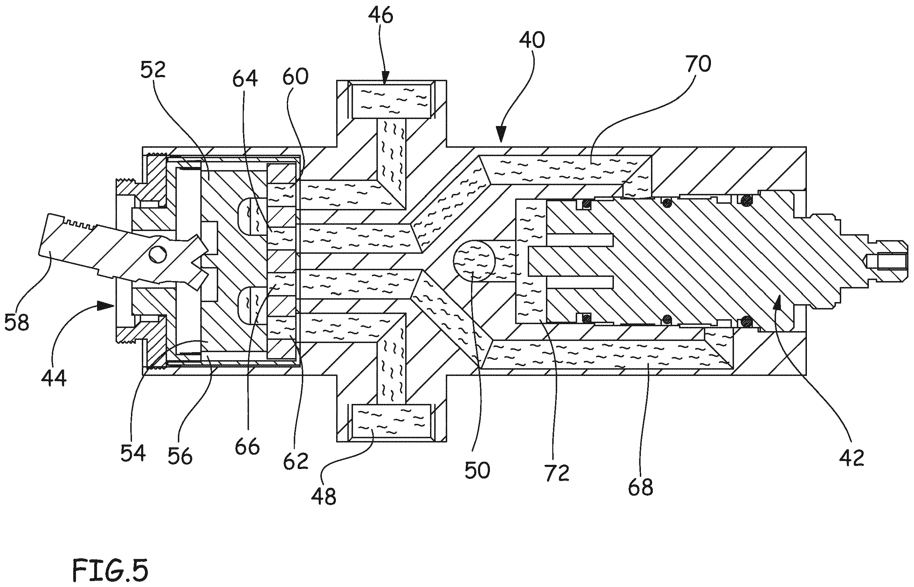

En se reportant aux figures 4 et 5, on note les modifications fondamentales d'agencement qui permettent d'obtenir les résultats recherchés, conformément à la présente invention.

La cartouche 44 de débit comporte des moyens 52 uniques de réglage commun et simultané des débits d'eau froide et d'eau chaude sanitaire. Ces moyens 52 uniques de réglage commun et simultané reçoivent les deux alimentations directement

En l'occurrence, il s'agit d'un agencement avec un boisseau 54 comportant deux trous borgnes, monté à translation dans une chambre 56 de débit, manœuvrable par un levier 58 basculant.

A cet effet, les alimentations 46 et 48, respectivement en eau froide et en eau chaude sanitaire, sont reliées directement à la chambre 56 de débit par deux entrées 60,62.

Cette chambre 56 de débit est munie de deux sorties 64, 66 de délivrance d'eau froide et d'eau chaude sanitaire, avec un même débit contrôlé par le boisseau 54.

Ces sorties 64, 66 de délivrance d'eau froide et d'eau chaude sanitaire, reliées par deux conduits 68, 70 distincts à la cartouche 42 thermostatique, alimentent respectivement en eau froide et en eau chaude sanitaire ladite cartouche 42 thermostatique.

La cartouche 42 thermostatique délivre dans une chambre 72 thermostatique une eau mitigée à la température préréglée, ceci de façon connue, comme précédemment décrit dans l'agencement de l'art antérieur.

Cette eau mitigée sort de la chambre 72 thermostatique par la sortie 50 de distribution.

On constate dans cet agencement que les clapets de l'art antérieur sont supprimés.

Ces clapets n'ont plus lieu d'être puisque les alimentations sont coupées directement et efficacement directement sur les alimentations d'eau froide et d'eau chaude par les moyens 52 de réglage commun et simultané des débits d'eau froide et d'eau chaude sanitaire de ces alimentations.

Ainsi, l'interconnexion entre les alimentations d'eau froide et d'eau chaude est totalement supprimée lorsque la robinetterie n'est pas sollicitée.

La cartouche 42 thermostatique est peu sollicitée et les manœuvres mécaniques sont limitées. Comme cette cartouche se situe en aval de la cartouche de réglage de débit, elle se trouve moins exposée aux éventuelles particules et micro particules transportées par l'eau qui sont interceptées préalablement.

Cette disposition avec la cartouche 44 de débit en amont de la cartouche 42 thermostatique et avec un réglage séparé mais simultané des débits pour alimenter ladite cartouche 42 thermostatique permet de pallier les problèmes de migration éventuelle de bactéries pathogènes, supprime l'entretien des clapets puisque les clapets eux-mêmes sont supprimés, protège la cartouche 42 thermostatique, respecte le même entraxe de montage autorisant ainsi une substitution directe.

Le fonctionnement est le suivant.

Lorsque l'utilisateur puise de l'eau mitigée, il règle préalablement la cartouche 42 thermostatique de façon à bénéficier d'une eau mitigée à la température souhaitée. La robinetterie se trouve dans la position représentée sur la figure 4.

L'utilisateur actionne ensuite le levier 58 de la cartouche 44 de réglage de débit en le basculant, comme montré sur la figure 5. Ce levier peut tout aussi bien est un agencement avec une rotation en fonction des besoins

Dans le mode retenu de réalisation, le boisseau 54 des moyens de réglage du débit se déplace alors en translation et les trous borgnes qu'il porte et qui sont uniquement en regard des entrées 60,62 d'alimentation se trouvent du fait du déplacement en translation de ce boisseau 54, partiellement au droit des sorties 64, 66, de façon parfaitement symétrique.

L'eau froide et l'eau chaude sont délivrées avec un même débit, indépendamment, et la cartouche 42 thermostatique se trouve alors alimentée avec un même débit contrôlé, indépendamment, en eau froide et en eau chaude. On note aussi que si les débits ne sont pas identiques du fait d'un différentiel de pression, la cartouche thermostatique compense et assure la délivrance d'une eau mitigée à la température exacte requise. Ceci est un problème pouvant être rencontré puisque les moyens de réglage de débit sont rapportés directement sur les alimentations froide et chaude, de type purement mécanique avec un débit proportionnel à la section et à la pression, comme la section est identique si la pression est différente, le débit est différent. On sait aussi que le pression peut varier suivant la puissance du tirage dans certaines installations.

Selon la présente invention, le sectionnement a été présenté sur la base de quatre entrées et sorties avec un mouvement en translation du boisseau pour l'ouverture et l'obturation de ces mêmes entrées et sorties mais il est rappelé que le boisseau peut aussi être manœuvré de façon tout à fait équivalente en rotation.

Les effets obtenus seront strictement les mêmes, seule la manœuvre pour l'utilisateur s'effectue selon cette variante par rotation au lieu d'un basculement de la commande.

Le choix reste uniquement une question liée à la demande des utilisateurs, aux gammes de production envisagées, aux designs des produits finis, sans rapport avec la technologie protégée par le jeu de revendications de la présente invention.

Le dispositif selon la présente invention permet de franchir un niveau de sécurité par rapport aux dispositifs existants à cartouches qui apportent une sécurité et une garantie quant à la sécurité thermostatique en apportant la sécurité sanitaire.

## Revendications

1. Dispositif de distribution d'un fluide thermostaté comprenant un corps (40) de robinetterie avec une cartouche (42) thermostatique, une cartouche (44) de débit directement montée sur des alimentations (46, 48) en eau froide et en eau chaude sanitaire respectivement, ainsi qu'une sortie (50) de distribution d'eau mitigée, la cartouche (44) de débit étant disposée en amont de la cartouche (42) thermostatique par rapport à ladite sortie (50) de distribution d'eau, la cartouche (42) thermostatique et la cartouche (44) de débit pouvant être substituées, indépendamment l'une de l'autre, suivant un même axe, dans des directions respectives opposées,
**caractérisé en ce que** la cartouche de débit est reçue dans une chambre (56) de débit munie de deux sorties (64, 66) de délivrance d'eau froide et d'eau chaude sanitaire reliées directement par des conduits (68, 70) distincts à des côtés diamétralement opposés respectifs de la cartouche thermostatique.

2. Dispositif de distribution d'un fluide thermostaté selon la revendication 1, **caractérisé en ce que** la cartouche (44) de débit comporte deux entrées (60, 62) d'alimentation en eau froide et en eau chaude sanitaire et deux sorties (64, 66) d'eau froide et d'eau froide sanitaire avec des moyens (52) de réglage commun et simultané des débits d'eau froide et d'eau chaude sanitaire.

3. Dispositif de distribution d'un fluide thermostaté selon la revendication 2, **caractérisé en ce que** les moyens (52) de réglage commun et simultané des débits d'eau froide et d'eau chaude sanitaire comprennent un boisseau (54) comportant deux trous borgnes monté à translation dans une chambre (56) de débit, manœuvrable par un levier (58) basculant, devant les entrées (60, 62) et sorties (64, 66) de ladite cartouche (44) de réglage de débit.

4. Dispositif de distribution d'un fluide thermostaté selon la revendication 2, **caractérisé en ce que** les moyens (52) de réglage commun et simultané des débits d'eau froide et d'eau chaude sanitaire comprennent un boisseau, monté à rotation dans une chambre (56) de débit, manœuvrable par rotation, devant les entrées (60, 62) et sorties (64, 66) de ladite cartouche (44) de réglage de débit.

## Patentansprüche

1. Vorrichtung zur Verteilung einer temperaturgeregelten Flüssigkeit, umfassend einen Armaturenkörper (40) mit einer Thermostatkartusche (42), einer direkt an dem Kaltbrauchwasser- bzw. Warmbrauchwasserzulauf (46, 48) montierten Mengenkartusche (44) sowie einem Mischwasserverteilausgang (50), wobei die Mengenkartusche (44) bezüglich des Wasserverteilausgangs (50) stromaufwärts von der Thermostatkartusche (42) angeordnet ist, wobei die Thermostatkartusche (42) und die Mengenkartusche (44) unabhängig voneinander gemäß derselben Achse in jeweiligen entgegengesetzten Richtungen substituiert werden können,
**dadurch gekennzeichnet, dass** die Mengenkartusche in einer Mengenkammer (56) aufgenommen ist, die mit zwei Kaltbrauchwasser- und Warmbrauchwasserabgabeausgängen (64, 66) versehen ist, die über separate Leitungen (68, 70) an jeweiligen diametral gegenüberliegenden Seiten der Thermostatkartusche direkt verbunden sind.

2. Vorrichtung zur Verteilung einer temperaturgeregelten Flüssigkeit nach Anspruch 1, **dadurch gekennzeichnet, dass** die Mengenkartusche (44) zwei Kaltbrauchwasser- und Warmbrauchwasserzulaufeingänge (60, 62) und zwei Kaltbrauchwasser- und Warmbrauchwasserausgänge (64, 66) mit Mitteln (52) zur gemeinsamen und gleichzeitigen Einstellung der Kaltbrauchwasser- und Warmbrauchwassermengen aufweist.

3. Vorrichtung zur Verteilung einer temperaturgeregelten Flüssigkeit nach Anspruch 2, **dadurch gekennzeichnet, dass** die Mittel (52) zur gemeinsamen und gleichzeitigen Einstellung der Kaltbrauchwasser- und Warmbrauchwassermengen einen mittels eines Kipphebels (58) manövrierbaren, zwei Sacklöcher aufweisenden Hahnkegel (54) umfassen, der zur Translation in einer Mengenkammer (56) vor den Eingängen (60, 62) und Ausgängen (64, 66) der Mengeneinstellkartusche (44) angebracht ist.

4. Vorrichtung zur Verteilung einer temperaturgeregelten Flüssigkeit nach Anspruch 2, **dadurch gekennzeichnet, dass** die Mittel (52) zur gemeinsamen und gleichzeitigen Einstellung der Kaltbrauchwasser- und Warmbrauchwassermengen einen drehmanövrierbaren Hahnkegel umfassen, der in einer Mengenkammer (56) vor den Eingängen (60, 62) und Ausgängen (64, 66) der Mengeneinstellkartusche (44) drehbar angebracht ist.

## Claims

1. Thermostatically controlled fluid dispensing device comprising a mixer body (40) with a thermostatic cartridge (42), a flow cartridge (44), which is directly mounted on the domestic hot and cold water supply lines (46, 48) respectively, and a mixed water dispensing outlet (50), the flow cartridge (44) being arranged upstream of the thermostatic cartridge (42) in relation to said water dispensing outlet (50), the thermostatic cartridge (42) and the flow cartridge (44) being able to be substituted, independently of one another, in the same axis, in respective opposite directions,
**characterised in that** the flow cartridge is received in a flow chamber (56) equipped with two outlets (64, 66) for supplying domestic hot and cold water, which are directly connected by separate pipes (68, 70) at respective diametrically opposite sides of the thermostatic cartridge.

2. Thermostatically controlled fluid dispensing device according to claim 1, **characterised in that** the flow cartridge (44) comprises two domestic hot and cold water supply inlets (60, 62) and two domestic hot and cold water outlets (64, 66) with shared and simultaneous control means (52) for the domestic hot and cold water flows.

3. Thermostatically controlled fluid dispensing device according to claim 2, **characterised in that** the shared and simultaneous control means (52) for the domestic hot and cold water flows comprise a tap casing (54) with three blind holes, which is translatably mounted in a flow chamber (56) and can be operated by a toggle lever (58), in front of the inlets (60, 62) and outlets (64, 66) of said flow control cartridge (44).

4. Thermostatically controlled fluid dispensing device according to claim 2, **characterised in that** the shared and simultaneous control means (52) for the domestic hot and cold water flows comprise a tap casing, which is rotatably mounted in a flow chamber (56) and can be operated by rotation, in front of the inlets (60, 62) and outlets (64, 66) of said flow control cartridge (44).
